Europäisches Patentamt

(19) European Patent Office

Office européen des brevets

(11) Publication number : **0 388 381 B1**

## (12) EUROPEAN PATENT SPECIFICATION

(45) Date of publication of patent specification :
29.09.93 Bulletin 93/39

(51) Int. Cl.⁵ : **H04L 27/18**

(21) Application number : **90850072.1**

(22) Date of filing : **20.02.90**

(54) **Wave-form generator.**

(30) Priority : **13.03.89 SE 8900883**

(43) Date of publication of application :
**19.09.90 Bulletin 90/38**

(45) Publication of the grant of the patent :
**29.09.93 Bulletin 93/39**

(84) Designated Contracting States :
**AT BE CH DE DK ES FR GB GR IT LI LU NL**

(56) References cited :
**US-A- 4 229 821**
**US-A- 4 750 192**
**IEEE Transactions on Communications, vol.**
**COM-26, no. 5, May 1978, pages 534-542;**
**Jager et al.: "Tamed frequency modulation. A**
**novel method to achieve spectrum economy**
**in digital transmission"**

(73) Proprietor : **TELEFONAKTIEBOLAGET L M**
**ERICSSON**
**Patent and Trademark Department**
**S-126 25 Stockholm (SE)**

(72) Inventor : **Ekelund, Björn Olof Peter**
**Qvantenborgsvägen 10A**
**S-222 38 Lund (SE)**

(74) Representative : **Lövgren, Tage et al**
**Telefonaktiebolaget L M Ericsson Patent**
**Department**
**S-126 25 Stockholm (SE)**

EP 0 388 381 B1

Jouve, 18, rue Saint-Denis, 75001 PARIS

## Description

The present invention relates to a waveform generator of the kind set forth in the preamble of Claim 1 and intended for generating those waveforms required by a radio transmitter of the quadrature type in binary continuous phase modulation (CPM).

## BACKGROUND ART

In binary continuous phase modulation, a binary "one" is permitted to correspond to a given positive phase-shift and a corresponding zero to a given negative phase-shift of the transmitted radio signal. The phase-shifts always depart from the phase position of the preceding bit, so that the curve formed by the phase of the transmitted radio signal will be continuous, with no abrupt transitions, as opposed to QPSK, for instance, where the transitions between the various phase positions occur in an abrupt manner. Continuous-phase modulation is essentially a narrow-band frequency-shift keying operation.

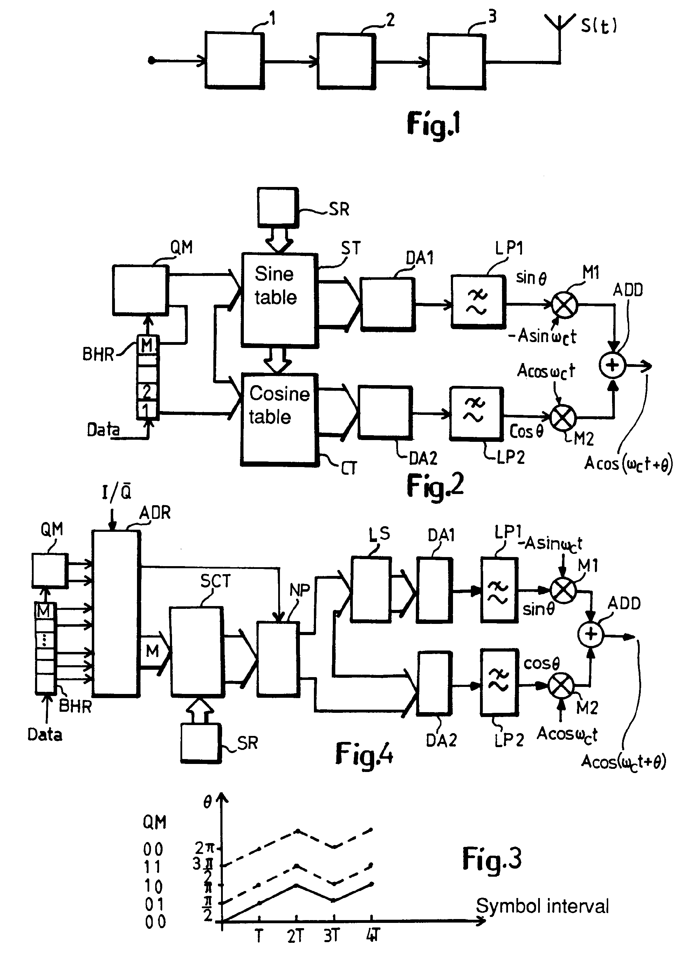

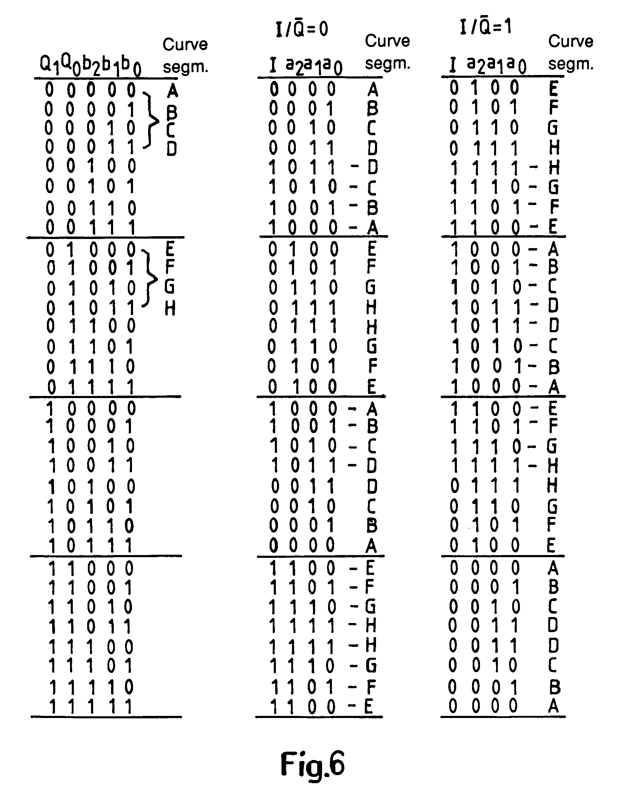

In principle, a CPM-modulator comprises the building blocks illustrated in Figure 1. The binary data-flow is converted in the converter 1 to an analog NRZ signal and is low-pass filtered through a premodulation filter 2. The signal is then fed into an FM-modulator 3 having a given, fixed modulation index.

This constant phase-continuity is contributory in obtaining a transmitted radio signal of narrow spectrum and the memory which the signal obtains as a result of this phase continuity can be utilized for signal detection purposes.

The premodulation filter 2 contributes to a further increase in spectrum economy, by the introduction of intentional intersymbol interference (ISI). The filter 2 has a low-pass character. Various compromises can be obtained between transmitted band width and interference immunity, by varying the impulse response of this filter. A Gaussian low-pass filter having a 3dB-band width corresponding to half the bit-frequency is an example of a conventional premodulation filter.

It would be very expensive to construct a CPM-modulator of the kind illustrated in Figure 1 with the precise degree of modulation required, for instance, with coherent reception. When transmitting seven ones followed by seven zeros, the signal vector must be found on the original site in the signal space, which requires an exact modulation index. Consequently, it is not realistic to use the principle illustrated in Figure 1 to realize constructions, and very primitive receivers are used instead. Neither is the principle useful for LSI-implementation, because of its analog character.

A precise modulation index can be obtained by using a pre-calculated quadrature waveforms stored in table form.

When certain limitations are introduced on modulation index (h = 2 K/P where K and P are integers without mutually common factors), it can be shown that the value of the phase of the radio signal during the duration of one data bit can be divided into two independent components, to wit a constant which depends solely on the prehistory and a time variable which depends solely on the bits last transmitted.

The component which is dependent on the earlier transmitted bits derives from the fact that each transmitted data symbol leaves a permanent phase contribution of $h\pi$. This contribution is constant throughout the whole of the symbol interval and is called the accumulated phase of the signal or its phase memory. The accumulated phase is, of course, limited to the interval $(0,2\pi)$ which means that it can only adopt P values.

The other component which is dependent solely on the transmitted bit and its nearest neighbour in time derives from the fact that the phase (with intentional intersymbol interference) at a particular point in time does not only depend on the data bit transmitted at that time, but also on the preceding and following symbols. Thus, the number of bits which contribute to the instantaneous phase of the radio signal depend on the duration of the impulse response of the premodulation filter.

It is possible to pre-calculate all waveforms capable of being generated by the generator, by using the aforesaid formulae. The table becomes 3-dimensional. Firstly, the table is addressed according to the symbol prehistory (the M latest symbols) and secondly, in accordance with the accumulated phase which has been collected at that moment of time, and thirdly, in accordance with the desired S waveform-samples in the symbol interval.

Figure 2 illustrates a known waveform generator for modulation index h = 1/2, published in IEEE COM-26, No. 5, 1978 "Tamed Frequency Modulation" by Jager et al., pages 534 to 542. The shift register BHR stores the M latest data bits, the up-down counter QM is controlled by the last bit in BHR and thus represents the accumulated phase with its output signal. The waveforms for sin $\Theta$ and cos $\Theta$ are stored in ROM-tables which are addressed an S number of times for each bit interval. The sample counter SR counts repeatedly from O to S-1. D/A-conversion and reconstruction filtering produces the correct analog signals, which are then fed into the quadrature modulator.

## DISCLOSURE OF THE INVENTION

In the case of the aforesaid known waveform generator, a sine and a cosine table recording the various waveforms is addressed by means of an address which comprises the M latest data bits and an address which comprises a value depending on the accumulated phase. It can be established by analysis of the curveforms which occur in the detection eye of the radio signal, that this detection eye contains solely $P \cdot 2^{M-2}$ different types of "fundamental-waveforms" (M = the number of symbols stored in the register BHR). The remaining $3P \cdot 2^{M-2}$ waveforms are either the same or the sign-inverse of some curveform among the "fundamental waveforms". According to the present invention, solely these $P \cdot 2^{M-2}$ basic waveforms are computed and then stored in one single table memory or table unit, which is thus capable of giving the waveforms for both sin $\Theta$ and cos $\Theta$, i.e. for both the I-channel and the Q-channel. The correct waveform can therewith be addressed through a separate addressing unit between an input register and a quadrant memory.

The object of the present invention is to provide a waveform generator intended for continuous phase modulation and containing only one single table unit for the waveforms stored.

The inventive waveform generator has the characteristic features set forth in the characterizing clause of Claim 1.

## BRIEF DESCRIPTION OF DRAWINGS

The invention will now be described in more detail with reference to the accompanying drawings, in which
Figure 1 is a block diagram illustrating a theoretical model of a transmitter for binary continuous phase modulation;
Figure 2 is a block diagram illustrating a prior art waveform generator;
Figure 3 is a diagram showing the phase variation of a radio signal for given incoming data symbols;
Figure 4 is a block diagram illustrating an inventive waveform generator;
Figure 5 is a more detailed block diagram of the waveform generator illustrated in Figure 4;
Figure 6 is a table of the binary values; and
Figure 7 is a time diagram.

## BEST MODE(S) FOR CARRYING OUT THE INVENTION

A brief description of the waveform generator known from the aforesaid literature passage will be given with reference to Figure 2, prior to describing the inventive waveform generator.

The known waveform generator includes table units ST and CT for storage of sin $\Theta$ and cos, $\Theta$ respectively. The table units are of the ROM-type and are addressed by a quadrant memory QM and a bit history register BHR. The output rate from the table units ST and CT is determined by a sample counter SR. Subsequent to digital-analog conversion in the units DA1, DA2 and low-pass filtration in the filters LP1, LP2, the resultant waveform sin $\Theta$ and cos $\Theta$ respectively is applied to its respective multiplicator M1 and M2 and an addition circuit ADD, so as to form the outgoing modulated signal $S(t) = A \cos (\omega_c t + \Theta)$, i.e. the radio wave.

The bit history register BHR consists of a shift register which stores a number of incoming data symbols, of which one is the data symbol concerned and the remainder are preceding and following symbols. All data symbols and the output signals of the quadrant memory form an address which indicates a given waveform in the table units ST and CT.

The quadrant memory QM is an up-and-down counter which is stepped upwards or downwards by the last data bit from the shift register BHR. The counter value, which is delivered to the sine and cosine table, therewith represents an accumulated phase value. The counter QM thus constitutes a quadrant memory for the phase angle $\Theta$, i.e. stores a binary value which indicates the quadrant in which $\Theta$ is located.

The number of bits stored in the register BHR depends on the extent of intentional ISI, and the number of steps P carried out by the counter QM depends on modulation index h. The number of samples per bit interval S depends on the desired quality of the analog signals. The total storage requirement of the known waveform generator is $2 \cdot S \cdot P \cdot 2^M$, where S = the number of samples per bit interval and M = the number of data bits last stored in BHR. The storage requirement can therefore be large when the quality requirement is high, i.e. when S and M are not small numbers, for instance, $S \geq 8$ and $M > 3$. For example, M = 3 and S = 8.

Figure 3 is a diagram showing the phase-angle variation for four data bits entering the register BHR when h = 1/2, M = 1 and when there is no intersymbol interference. It is assumed that $\Theta$ is located in the first quadrant and starts from value 0, i.e. the content of the register BHR is zero and the quadrant memory QM is set to zero. When data is introduced into the register BHR during the symbol interval O-T, there is formed an address which indicates sin $\Theta$ and cos $\Theta$ in the sine table ST and the cosine table CT, such that $\Theta = \pi/2$ at the end of the interval and the register QM will be set to 01. During the next following interval T-2T, it is assumed that the register BHR is loaded so that the final value at 2T is $\Theta = \pi$. The value in the register QM will then be 10. It is assumed that the data symbols introduced into the register BHR during the symbol interval 2T-3T were such as to reduce $\Theta$ to $\pi/2$ at 3T. The value stored in the register QM is then again 01. During the interval 3T-4T, $\Theta$ increases to $\pi$ and the register QM stores the value 10. The tables ST and CT are addressed during all intervals 0, T, 2T, 3T, 4T, so as to point out sine and cosine for $\Theta = O$, $\pi/2$, $\pi$ and $3\pi/2$.

Thus, there are stored in the register BHR those data bits which during a symbol interval indicate which instantaneous value of sin $\Theta$ and cos $\Theta$ is to be addressed, whereas the value in the register QM (the quadrant memory) discloses the value from which the $\Theta$-address shall commence, i.e. the start value. The broken lines in Figure 3 indicate the course or procedure followed for different starting points, i.e. different values stored in the register QM, whereas the variation is the same during the symbol interval O, T, 2T, 3T, 4T for similar data symbols fed to the register BHR.

Figure 4 illustrates the inventive waveform generator. In common with the known waveform generator illustrated in Figure 2, the inventive generator includes a shift register BHR, an up-down counter QM on the input side, and converter units DA1, DA2, filters LP1, LP2 and multiplicators M1, M2, and also an addition circuit ADD on the output side. The novel waveform generator distinguishes from the known waveform generator, insomuch that the two table units ST and CT have been replaced with one single table unit SCT for storage of the aforesaid basic waveforms ($P \cdot 2^{M-2}$) for a given number of bits in the register BHR. This unit may consist of a ROM programmed in the manner described in the accompanying Appendix.

The inputs of an address conversion unit ADR are connected to the outputs of the shift register BHR. In addition, the output of BHR, which output represents the oldest bit, is connected to the input of the up-down counter QM, which constitutes the quadrant memory. The counter QM has for h = 1/2 two outputs (most significant and least significant bit) which are connected to the address conversion unit ADR.

The address conversion unit ADR has M outputs connected to the address inputs of the table unit SCT to point out the associated waveforms in dependence on the data symbols present in the register BHR during each symbol interval T, and in dependence on the value of the quadrant memory QM. The address conversion unit ADR is also connected to a control input of a logic unit NP which receives across its inputs the output values from the table unit SCT. The unit either inverts the values or allows the values to pass unchanged, depending on the control signal I delivered by the address conversion unit ADR. The table unit SCT is operative to store the values of cos $\Theta$ for those $\Theta$ which have been addressed to said unit. The value of sin $\Theta$ can be obtained by modifying the address and optionally inverting the value of cos $\Theta$ obtained from the unit SCT, this inversion being effected in the unit NP in dependence on the control signal I arriving from the address conversion unit ADR. This inversion or passing of the value of the waveform from the table unit SCT is controlled alternately during a sampling period S determined by a sampling unit SR. This unit samples the addressed content (the addressed waveform) in the table unit a number of times S during a symbol interval T, for instance eight times. During one half of a sampling period, the value is fed-out from the table unit SCT in order to obtain cos $\Theta$ and during the other half in order to obtain sin $\Theta$. Both sin $\Theta$ and cos $\Theta$ are therewith digitally represented.

A latching circuit LS is operative to latch the value of sin $\Theta$ during the period ($\approx$ half the sampling interval) required to form the corresponding cos $\Theta$. Subsequent to the lapse of a sampling interval, these two values occur on the input of respective converters DA1, DA2, i.e. sin $\Theta$ appears on the input of the converter DA1 and cos $\Theta$ appears on the input of the converter DA2. Upon termination of the sampling interval, both of the converters DA1, DA2 are activated to effect conversion to corresponding analog values, these values being supplied simultaneously to the downstream multiplicators M1, M2. Respective carrier waves -A sin $\omega_c t$ and A cos $\omega_c t$ are modulated in the multiplicators M1, M2 in this way and subsequent to addition in the addition circuit ADD, there is obtained the signal which forms the transmitted radio signal.

With respect to the inventive waveform generator, all data states, i.e. arrays of data symbols stored in the register BHR during a symbol interval, which result in the same waveform shall result in the same address to the reduced table for cos $\Theta$ stored in the table unit SCT. Thus, there is stored in the table unit SCT a plurality fundamental waveforms which can be addressed and subsequently inverted so as to obtain sin $\Theta$ and cos $\Theta$ for all possible binary combinations of the incoming data symbols. The number of curveforms stored is $P \cdot 2^{M-2}$, where M = the number of binary positions in the register BHR and P is the number of positions in QM.

The output signal from the counter QM (two bits) determines the quadrant in which the start value of $\Theta$, i.e. where each $\Theta = \Theta_o$, is located when addressing the table unit SCT. The output signal from the register BHR determines which of the stored fundamental waveforms shall be pointed out in the table unit SCT. The table unit stores the waveforms for either sin $\Theta$ or cos $\Theta$ and when, for instance, cos $\Theta$ is stored, sin $\Theta$ is obtained by address conversion in ADR and conditional inversion in the unit NP. The stored sampled values of the waveform are brought forward S number of times with each symbol interval T.

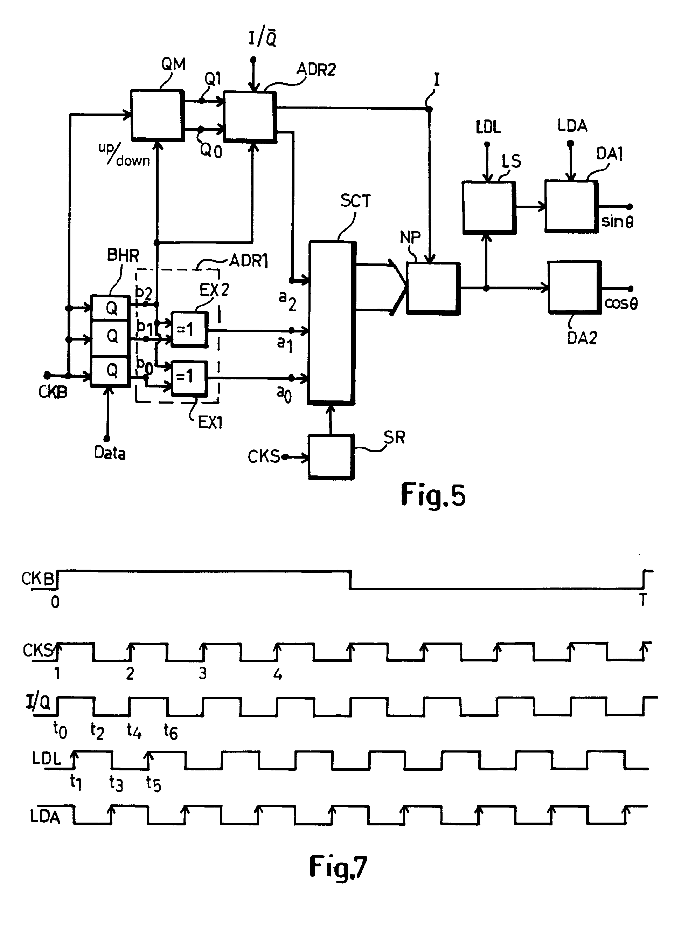

Figure 5 illustrates an embodiment of the inventive waveform generator where M = 3, h = 1/2 and S = 8.

The bit history register is a shift register BHR, having three positions and where incoming dataflow in the form of binary values 0 or 1 is fed-in over the data input of the register BHR. The output signal from the register forms an array of binary symbols $b_2$, $b_1$, $b_o$, where $b_2$ is the most significant bit. This bit is supplied to the counter input of the out/down-counter QM, which forms the quadrant memory. Its two outputs $Q_1$, $Q_o$ produce a binary number having two positions, where $Q_1$ is the most significant bit. Both the counter QM and the register BHR are clocked with the same clock signal CKB (see Figure 7).

An EXLUSIVE-OR gate EX1, EX2 is connected to each of the outputs $b_1$ and $b_o$ of the register BHR for the purpose of inverting $b_1$ and $b_o$ when $b_2$ is equal to 1. The outputs of the gates EX1, EX2 are each connected to a respective address input $a_o$ and $a_1$ of the table unit SCT. The gates EX1, EX2 form a part ADR1 of the address conversion unit ADR illustrated in Figure 4.

The other part of the address conversion unit ADR comprises a unit ADR2 which has four inputs and two outputs. The unit ADR2 is intended to form the signal applied to the third address input $a_2$ of the unit SCT, and an inverting or non-inverting control signal I applied to the negating unit NP described above. The table in Figure 6 illustrates the relationship between all possible register positions in the register BHR, the counter positions in the memory QM, the address signals $a_2$, $a_1$, $a_o$ and the control signal I. The addressing unit ADR2 can be constructed on the basis of this table, with the aid, for instance, of a full-adder and associated logic. A binary timing signal designated 1/Q is also applied to the addressing unit, this timing signal controlling the output of the signals I and $a_2$, so that the value required to form sin $\Theta$ is fed-out during one half of a sampling interval and the value required to form cos $\Theta$ is fed-out from the unit NP during the other half of the sampling interval and sent to a subsequent locking circuit (sin $\Theta$) and converter DA2 (cos $\Theta$).

The logic relationships between the input magnitudes $b_o$, $b_1$, $b_2$; $Q_1$, $Q_o$ and the output magnitudes $a_o$, $a_1$, $a_2$; I are determined by the following relationships:

$$a_o = B_2 \oplus b_o, a_1 = b_2 \oplus b_1$$
$$I/Q = 0: a_2 = Q_o, I = Q_1 \oplus (b_2 \wedge Q_o)$$
$$I/Q = 1: a_2 = Q_o, I = Q_1 \oplus Q_o + (b_2 \wedge Q_o))$$

which can be written as:

$$a_2 = Q_o \oplus I/Q$$
$$I = Q_1 \oplus (Q_o I/Q_o \oplus (b_2 \wedge Q_o))$$

The table in Figure 6 shows all addressing signals $a_2$, $a_1$, $a_o$ and the inverting control signal I for all possible incoming data-symbol combinations $b_2$, $b_1$, $b_o$ with three bits and in the various quadrants for $\Theta$.

As before mentioned, all waveforms for sin $\Theta$ and cos $\Theta$ can be obtained from a plurality of $P \cdot 2^{M-2}$ fundamental waveforms stored in the table unit SCT. In the illustrated case, M = 3 and P = 4, and consequently only eight fundamental waveforms are needed, hereinafter called curve segments. These segments are referenced A, B, C, D, E, F, G, H in the table. The value of each of these curve segments is stored in the table unit SCT. For each given value of $Q_1$, $Q_o$ (denotes the quadrant for $\Theta$) and data-symbol array $b_2$, $b_1$, $b_o$, there are obtained two address arrays $a_2$, $a_1$, $a_o$ for I/Q = 0 and I/Q = 1, through the address units ADR1, ADR2. The table unit SCT is thus addressed twice for the same array of data.

For instance, the data array $b_2$, $b_1$, $b_o$ = 101 in the first quadrant ($Q_1$ $Q_o$ = 00) obtains the addresses $a_2$ $a_1$, $a_o$ = 011 for $I/\overline{Q}$ = 0 and 110 for $I/\overline{Q}$ = 1. This gives the curve segments -C and -G respectively, the values of which are sampled alternately by the sampling unit SR.

The time diagram given in Figure 7 discloses the modus operandi of the waveform generator shown in Figure 5 in more detail, in conjunction with the above example.

When the clock pulse CKB is high, the register BHR is shifted and a given array of data symbols $b_2$, $b_1$, $b_0$ = 101 is fed to the gates EX1, EX2, to the counter QM and to the address unit ADR2. At the same time, the counter QM is activated by the clock pulse CKB, causing the counter to produce a given value $Q_1$ $Q_o$ (= 00). A given address array $a_2$, $a_1$, $a_o$ and a given control signal I is obtained. At the same time, $I/\overline{Q}$ equals 1 (sin $\Theta$). During the interval $t_o$- $t_2$, a value is brought forwards from the indicated curve segment G by the sampling pulse CKS1 and this value is fed to the unit NP. Since I = 1, the value is inverted before being sent further to the latching circuit LS. This circuit latches the value at time $t_1$. The converters are still unactivated, since the control signal LDA has not yet become high.

When $I/\overline{Q}$ becomes 0 at time $t_2$, an address array $a_2$, $a_1$, $a_o$ different than that for I/Q = 1 is obtained, namely the address array which gives the curve segment C and which is brought forward by the sampling unit SR during the time period $t_2$ - $t_4$, and which is then fed to the unit NP. Since I = 1, there is obtained an inverted value of curve segment to the converter DA2. At the time point $t_3$, both of the converters DA1, DA2 are activated and the values deriving from the curve segments -G and -C are converted and applied to the following units M1, M2 and ADD in the manner aforedescribed. Remaining values of the curve segments -G and -C are brought forward in a similar manner in accordance with the example during the whole of the bit clocking interval, until the whole of the curve segment for the input data-symbol array $b_1$, $b_2$, $b_o$ (= 100) has been processed. This procedure is repeated for all eight sampling pulses during a complete clock interval (= T), whereafter a new data symbol is clocked into the register BHR (the counter QM being stepped up or down) and a new curve segment for sin $\Theta$ and cos $\Theta$ is fed into the converters DA1, DA2.

The proposed waveform generator results in a decrease in waveform storage requirements, namely $P \cdot 2^{M-2}$ as compared with $2 \cdot P \cdot 2^{M}$ in the case of known generators. Because the surface-area requirement of the generator is greatly reduced, LSI can be readily realized. The surface-area requirement of the proposed generator is about one-eighth of the surface-area requirement of the known waveform generator. The improvement is due partly to the use of symmetries in the modulation schedule and partly because both of the quadrature signals are obtained from one and the same reference table.

ALGORITHM TO CALCULATE THE TABLE CONTENTS w(k,a)

$$w(k,a) = \cos\left(\pi\left[\frac{1}{2}\left(a \cdot 2^{1-M} \bmod 2\right) - q\left(T \cdot \left(\frac{k}{S} = \frac{M-2}{2}\right)\right) + \sum_{i=0}^{M-2}\left(2\left[a \cdot 2^{-i} \bmod 2\right] -1\right) q\left(T\left(\frac{k}{S} - \frac{2i-M}{2}\right)\right)\right]\right)$$

$$k \in \left[0, \; S-1\right]$$

$$a \in \left[0, \; 2^M-1\right]$$

S = number of sampel bit interval

M = number of bits in the bit history register BHR

$$q(h) = \int_{\tau=-\infty}^{h} \int_{-T/2}^{+T/2} m(\sigma) \, d\sigma \, d\tau, \; \text{where}$$

$m(\sigma)$ = the impulse response of the premodu-

　　lation filter

EP 0 388 381 B1

## Claims

1.

A waveform generator for generating a first waveform sin $\Theta$ and a second waveform cos $\Theta$, where $\Theta$ is the phase angle of a radio signal when modulating with the aid of digital continuous phase modulation with modulation index h = $2^{-n}$, where n is an integer, from a radio transmitter of quadrature type in dependence on the data symbols to be transmitted, wherein the waveform generator includes:

a bit history register (BHR) for storing in given sequence a given number (M) of incoming binary data symbols ($b_0$, $b_1$, $b_2$...$b_{M-1}$), which denote the instant phase angle ($\Theta_m$);

a memory means (QM) for storing a binary-coded value ($Q_0$, $Q_1$,...) which gives the accumulated phase ($\Theta_0$);

a storage means (SCT), configured to store data in table form, having a number of binary address inputs ($a_0$, $a_1$, $a_2$...$a_{M-1}$) for a number of values which denote the waveform in dependence on said number (M) of incoming data symbols and the value stored in said memory means (QM);

a sampling unit (SR) for detecting the values stored in the storage device (SCT) and belonging to a given waveform; and

output units including digital-analog converters (DA1, DA2) and multiplicator means (M1, M2) and adders (ADD) for compiling the radio signal;

**characterized** in that the storage device (SCT) is adapted to store, in table form, P·$2^{M-2}$ curve segments of said waveforms as the digital values for solely one of said waveforms (cos $\Theta$), wherein M = the number of address inputs on the storage device (SCT), this number being the same as the number of data symbols stored in said bit history register (BHR), and P is the number of states in said memory device (QM); in that an address conversion unit (ADR) is provided for compiling an address to said address inputs in dependence on said number (M) of data symbols and the value ($Q_0$, $Q_1$, ...) stored in the memory device (QM), wherein a timing signal (I/Q) having two states is effective to cause the address conversion unit to alternate such that said address ($a_2$, $a_1$, $a_0$) will alternately indicate a sin or cosin curve segment (G) belonging to said data symbols for one state of the timing signal and thereafter a cosin or sin curve segment (C) belonging to the same data symbols for the other state of the timing signal; in that an inverting unit (NP) is provided for controlling a signal (I) from said address conversion unit (ADR) such as to invert or not to invert the sine and cosine curve segments obtained from the storage unit (SCT) in dependence on the value of the timing signal and the value stored in the memory device (QM); and in that a latching means (LS) is provided for latching the value of the sin or cosin curve segment while the cosine or sine curve segment is indicated in the storage device (SCT) and is fed-out so that the obtained values of the two curve segments are converted simultaneously in respective digital-analog converters

2.  A waveform generator according to Claim 1,
**characterized** in that the P·$2^{M-2}$ stored waveforms in the storage device (SCT) are stored in the form of digital values which are selected so that in the first quadrant (0 <$\Theta$< $\pi$/2) of the phase angle, the digital values give P·$2^{M-3}$ determined curve segment for sin $\Theta$ and P·$2^{M-3}$ determined curve segment for cos $\Theta$ and for the same array of incoming data symbols ($b_0$, $b_1$, $b_2$...$b_{M-1}$); in that in the second, third and fourth quadrants ($\pi$/2 $\leq \Theta$ $\pi$, $\pi \leq \Theta < 3\pi$/2, $3\pi$/2 + $\leq \Theta < 2\pi$) of the phase angle, the stored digital values denote the P·$2^{M-3}$ curve segments for sin $\Theta$ which, in the nearest preceding quadrant, applies to cos $\Theta$ in the same array of incoming data symbols ($b_0$, $b_1$, $b_2$...$b_{M-1}$) and correspondingly for cos $\Theta$, wherein the values of respective quadrants are determined by the value ($Q_0$, $Q_1$,.....) stored in said quadrant memory (QM).

## Patentansprüche

1.  Ein Wellenformen-Generator zum Erzeugen einer ersten Wellenform Sinus Theta und einer zweiten Wellenform Cosinus Theta, wobei Theta der Phasenwinkel des Funksignals ist, wenn eine Modulation mit Hilfe einer digitalen kontinuierlichen Phasenmodulation bei einem Modulationsindex von h = $2^{-n}$, von einem Funksender vom Quadratur-Typ in Abhängigkeit von zu sendenden Datensymbolen durchgeführt wird, wobei n eine ganze Zahl ist und wobei der Wellenformen-Generator umfaßt:

ein Register (BHR) für Bitgeschichte, um in einer gegebenen Abfolge eine gegebene Anzahl (M) von eintreffenden binären Datensymbolen ($b_0$, $b_1$, $b_2$, ..., $b_{M-1}$) zu speichern, welche den augenblicklichen Phasenwinkel ($Theta_m$) bezeichnen;

eine Speichereinrichtung (QM) zum Speichern eines binär kodierten Wertes ($Q_o$/ $Q_1$/ ...), welche die akkumulierte Phase ($Theta_o$) bereitstellen;

eine Speicherungseinrichtung (SCT), die in Tabellenform für die Daten konfiguriert ist und eine Anzahl von binären Adresseneingängen ($a_o$, $a_1$, $a_2$, ..., $a_{M-1}$) für eine Anzahl von Werten aufweist, welche die Wellenform in Abhängigkeit von der Anzahl (M) von eintreffenden Datensymbolen und von dem in der Speichereinrichtung (QM) gespeicherten Wert bezeichnet;

eine Abtasteinheit (SR) zum Erfassen der Werte, die in der Speicherungseinrichtung (SCT) gespeichert sind und zu einer gegebenen Wellenform gehören; und

Ausgangseinheiten mit Digital-Analog-Wandlern (DA1, DA2) und einer Multiplationseinrichtung (M1, M2) und Addierern (ADD) zum Zusammensetzen des Funksignals;

dadurch **gekennzeichnet**, daß

die Speicherungseinrichtung (SCT) ausgelegt ist, um $P \cdot 2^{M-2}$ Kurvensegmente der Wellenformen in Tabellenform als die digitalen Werte für nur eine der Wellenformen Cosinus Theta zu speichern, wobei M = die Anzahl von Adresseneingängen an der Speicherungseinrichtung (SCT) ist, wobei diese Anzahl die gleiche wie die Anzahl von in dem Register (BHR) für Bitgeschichte gespeicherten Datensymbolen ist und P die Anzahl von Zuständen in der Speichereinrichtung (QM) ist;

eine Adressen-Umwandlungseinheit (ADR) vorgesehen ist, um eine Adresse an den Adresseneingängen in Abhängigkeit von der Anzahl (M) von Datensymbolen und dem in der Speichereinrichtung (QM) gespeicherten Wert ($Q_o$, $Q_1$, ...) zusammenzusetzen, wobei ein Zeitsteuerungssignal (I/Q) mit zwei Zuständen wirksam ist, um die Adressen-Umwandlungseinheit zu veranlassen derart zu alternieren, daß die Adresse ($a_2$, $a_1$, $a_o$) abwechselnd ein Sinus- oder Cosinus-Kurvensegment (G), welches zu den Datensymbolen für einen Zustand des Zeitsteuerungssignals gehört und danach ein Cosinus- oder Sinus-Kurvensegment (C) anzuzeigen, welches zu den gleichen Datensymbolen für den anderen Zustand des Zeitsteuerungssignals gehört;

eine Invertiereinheit (NP) vorgesehen ist, zum Steuern eines Signals (I) von der Adressen-Umwandlungseinheit (ADR), um die aus der Speicherungseinheit (SCT) erhaltenen Sinus- und Cosinus-Kurvensegmente in Abhängigkeit von dem Wert des Zeitsteuerungssignals und von dem in der Speichereinrichtung (QM) gespeicherten Wert zu invertieren oder nicht zu invertieren; und

eine Halteeinrichtung (LS) vorgesehen ist, um den Wert des Sinus- oder Cosinus-Kurvensegments zu halten, während das Cosinus- oder Sinus-Kurvensegment in der Speicherungseinrichtung (SCT) angezeigt wird und so herausgeführt wird, daß die erhaltenen Werte der beiden Kurvensegmente gleichzeitig in jeweiligen Digital-Analog-Wandlern gewandelt werden.

**2.** Ein Wellenformen-Generator nach Anspruch 1,

dadurch **gekennzeichnet**, daß die $P \cdot 2^{M-2}$ gespeicherten Wellenformen in der Speicherungseinrichtung (SCT) in der Form von digitalen Werten gespeichert werden, die so gewählt sind, daß in dem ersten Quadranten (0 < Theta < Pi/2) des Phasenwinkels die digitalen Werte $p \cdot 2^{M-3}$ bestimmte Kurvensegmente für Sinus Theta und $P \cdot 2^{M-3}$ bestimmte Kurvensegmente für Cosinus Theta und für die gleiche Anordnung von eintreffenden Datensymbolen ($b_o$, $b_1$, $b_2$, ..., $b_{M-1}$) ergeben;

in den zweiten, dritten und vierten Quadranten (Pi/2 $\leq$ Theta < Pi, Pi $\leq$ Theta < $^{3Pi}$/2, 3Pi/2 $\leq$ Theta < 2Pi) des Phasenwinkels die gespeicherten digitalen Werte die $P \cdot 2^{M-3}$ Kurvensegmente für Sinus Theta bezeichnen, was in dem nächsten vorangehenden Quadranten auf Cosinus Theta in der gleichen Anordnung von eintreffenden Datensymbolen ($b_o$, $b_1$, $b_2$, ..., $b_{M-1}$) zutrifft und dementsprechend für Cosinus Theta, wobei die Werte der jeweiligen Quadranten durch den in dem Quadrant-Speicher (QM) gespeicherten Wert ($Q_o$, $Q_1$, ...) bestimmt werden.

**Revendications**

**1.**

Un générateur de formes d'onde destiné à générer une première forme d'onde sin$\Theta$ et une seconde forme d'onde cos$\Theta$, en désignant par $\Theta$ l'angle de phase d'un signal hertzien qui est modulé à l'aide d'une modulation de phase numérique continue avec un indice de modulation $h = 2^{-n}$, n étant un entier, par un radioémetteur du type à modulation en quadrature, sous la dépendance de symboles de données à émettre, ce générateur de formes d'onde comprenant :

un registre d'historique de bits (BHR) pour enregistrer selon une séquence déterminée un nombre déterminé (M) de symboles de données binaires entrants ($b_0$, $b_1$, $b_2$, ... $b_{M-1}$), qui désignent l'angle de phase instantané ($\Theta_m$);

des moyens de mémoire (QM) pour enregistrer une valeur codée en binaire ($Q_0$, $Q_1$, ...) qui donne la phase accumulée ($\Theta_0$);

des moyens d'enregistrement (SCT), ayant une configuration prévue pour enregistrer des données sous la forme d'un tableau, ayant un certain nombre d'entrées d'adresse binaires ($a_0$, $a_1$, $a_2$ ... $a_{M-1}$) pour un certain nombre de valeurs qui désignent la forme d'onde sous la dépendance du nombre (M) de symboles de données entrants et de la valeur qui est enregistrée dans les moyens de mémoire (QM);

une unité d'échantillonnage (SR) pour détecter les valeurs qui sont enregistrées dans le dispositif d'enregistrement (SCT) et qui appartiennent à une forme d'onde donnée; et

des unités de sortie, comprenant des convertisseurs numérique-analogique (DA1, DA2) et des moyens multiplieurs (M1, M2) et des additionneurs (ADD) pour élaborer le signal hertzien;

**caractérisé** en ce que le dispositif d'enregistrement (SCT) est conçu pour enregistrer, sous forme de table, $P.2^{M-2}$ segments de courbe des formes d'onde, sous la forme des valeurs numériques pour l'une seulement des formes d'onde ($\cos\Theta$), M étant le nombre d'entrées d'adresse du dispositif d'enregistrement (SCT), ce nombre étant identique au nombre de symboles de données qui sont enregistrés dans le registre d'historique de bits (BHR), et P étant le nombre d'états dans le dispositif de mémoire (QM); en ce qu'une unité de conversion d'adresse (ADR) est incorporée pour élaborer une adresse qui est appliquée aux entrées d'adresse sous la dépendance du nombre (M) de symboles de données et de la valeur ($Q_0$, $Q_1$, ...) qui est enregistrée dans le dispositif de mémoire (QM), un signal de temps (I/Q) ayant deux états faisant alterner le fonctionnement de l'unité de conversion d'adresse, de façon que l'adresse ($a_2$, $a_1$, $a_0$) indique alternativement un segment de courbe de sinus ou de cosinus (G) appartenant aux symboles de données pour un état du signal de temps, et indique ensuite un segment de courbe de cosinus ou de sinus (C) appartenant aux mêmes symboles de données, pour l'autre état du signal de temps;

en ce qu'une unité d'inversion (NP) est incorporée pour contrôler un signal (I) provenant de l'unité de conversion d'adresse (ADR) de façon à inverser ou à ne pas inverser les segments de courbe de sinus et de cosinus qui sont obtenus à partir de l'unité d'enregistrement (SCT) sous la dépendance de la valeur du signal de temps et de la valeur qui est enregistrée dans le dispositif de mémoire (QM);

et en ce que des moyens de mémorisation (LS) sont incorporés pour mémoriser la valeur du segment de courbe de sinus ou de cosinus pendant que le segment de courbe de cosinus ou de sinus est indiqué dans le dispositif d'enregistrement (SCT) et est présenté en sortie, de façon que les valeurs obtenues des deux segments de courbe soient converties simultanément dans des convertisseurs numérique-analogique respectifs.

2. Un générateur de formes d'onde selon la revendication 1,
**caractérisée** en ce que les $P.2^{M-2}$ formes d'onde enregistrées dans le dispositif d'enregistrement (SCT) sont enregistrées sous la forme de valeurs numériques qui sont sélectionnées de façon que dans le premier quadrant ($0 < \Theta < \pi/2$) de l'angle de phase, les valeurs numériques donnent $P.2^{M-3}$ segments de courbe déterminés pour $\sin\Theta$ et $P.2^{M-3}$ segments de courbe déterminés pour $\cos\Theta$, et pour le même tableau de symboles de données entrants ($b_0$, $b_1$, $b_2$ ... $b_{M-1}$);

et en ce que dans les second, troisième et quatrième quadrants ($\pi/2 \leq \Theta < \pi$, $\pi \leq \Theta < \pi/2$, $3\pi/2 \leq \Theta < 2\pi$) de l'angle de phase, les valeurs numériques enregistrées désignent les $P.2^{M-3}$ segments de courbe pour $\sin\Theta$ qui, dans le quadrant précédent le plus proche, s'appliquent à $\cos\Theta$ dans le même tableau de symboles de données entrants ($b_0$, $b_1$, $b_2$ ... $b_{M-1}$), et de façon correspondante pour $\cos\Theta$, les valeurs de quadrants respectifs étant déterminées par la valeur ($Q_0$, $Q_1$, ...) qui est enregistrée dans la mémoire de quadrant (QM).

Fig.1

Fig.2

Fig.4

Fig.3

| $Q_1 Q_0 b_2 b_1 b_0$ | Curve segm. |
|---|---|
| 0 0 0 0 0 | A ⎫ |
| 0 0 0 0 1 | B ⎬ |
| 0 0 0 1 0 | C ⎬ |
| 0 0 0 1 1 | D ⎭ |
| 0 0 1 0 0 | |
| 0 0 1 0 1 | |
| 0 0 1 1 0 | |
| 0 0 1 1 1 | |
| 0 1 0 0 0 | E ⎫ |
| 0 1 0 0 1 | F ⎬ |
| 0 1 0 1 0 | G ⎬ |
| 0 1 0 1 1 | H ⎭ |
| 0 1 1 0 0 | |
| 0 1 1 0 1 | |
| 0 1 1 1 0 | |
| 0 1 1 1 1 | |
| 1 0 0 0 0 | |
| 1 0 0 0 1 | |
| 1 0 0 1 0 | |
| 1 0 0 1 1 | |
| 1 0 1 0 0 | |
| 1 0 1 0 1 | |
| 1 0 1 1 0 | |
| 1 0 1 1 1 | |
| 1 1 0 0 0 | |
| 1 1 0 0 1 | |
| 1 1 0 1 0 | |
| 1 1 0 1 1 | |
| 1 1 1 0 0 | |
| 1 1 1 0 1 | |
| 1 1 1 1 0 | |
| 1 1 1 1 1 | |

**$I/\bar{Q}=0$**

| $I\ a_2 a_1 a_0$ | Curve segm. |
|---|---|
| 0 0 0 0 | A |
| 0 0 0 1 | B |
| 0 0 1 0 | C |
| 0 0 1 1 | D |
| 1 0 1 1 | − D |
| 1 0 1 0 | − C |
| 1 0 0 1 | − B |
| 1 0 0 0 | − A |
| 0 1 0 0 | E |
| 0 1 0 1 | F |
| 0 1 1 0 | G |
| 0 1 1 1 | H |
| 0 1 1 1 | H |
| 0 1 1 0 | G |
| 0 1 0 1 | F |
| 0 1 0 0 | E |
| 1 0 0 0 | − A |
| 1 0 0 1 | − B |
| 1 0 1 0 | − C |
| 1 0 1 1 | − D |
| 0 0 1 1 | D |
| 0 0 1 0 | C |
| 0 0 0 1 | B |
| 0 0 0 0 | A |
| 1 1 0 0 | − E |
| 1 1 0 1 | − F |
| 1 1 1 0 | − G |
| 1 1 1 1 | − H |
| 1 1 1 1 | − H |
| 1 1 1 0 | − G |
| 1 1 0 1 | − F |
| 1 1 0 0 | − E |

**$I/\bar{Q}=1$**

| $I\ a_2 a_1 a_0$ | Curve segm. |
|---|---|
| 0 1 0 0 | E |
| 0 1 0 1 | F |
| 0 1 1 0 | G |
| 0 1 1 1 | H |
| 1 1 1 1 | − H |
| 1 1 1 0 | − G |
| 1 1 0 1 | − F |
| 1 1 0 0 | − E |
| 1 0 0 0 | − A |
| 1 0 0 1 | − B |
| 1 0 1 0 | − C |
| 1 0 1 1 | − D |
| 1 0 1 1 | − D |
| 1 0 1 0 | − C |
| 1 0 0 1 | − B |
| 1 0 0 0 | − A |
| 1 1 0 0 | − E |
| 1 1 0 1 | − F |
| 1 1 1 0 | − G |
| 1 1 1 1 | − H |
| 0 1 1 1 | H |
| 0 1 1 0 | G |
| 0 1 0 1 | F |
| 0 1 0 0 | E |
| 0 0 0 0 | A |
| 0 0 0 1 | B |
| 0 0 1 0 | C |
| 0 0 1 1 | D |
| 0 0 1 1 | D |
| 0 0 1 0 | C |
| 0 0 0 1 | B |
| 0 0 0 0 | A |

## Fig.6

Fig.5

Fig.7